# EUROPEAN PATENT SPECIFICATION

(11) **EP 2 253 092 B1**
(45) Date of publication and mention of the grant of the patent: **26.12.2012**
(21) Application number: 09718482.4
(22) Date of filing: 06.03.2009
(51) Int. Cl.: H04L 1/00

(54) **METHOD FOR DETERMINING A DATA FORMAT FOR PROCESSING DATA AND DEVICE EMPLOYING THE SAME**
VERFAHREN ZUR BESTIMMUNG EINES DATENFORMATS ZUR DATENVERARBEITUNG UND VORRICHTUNG DAMIT
PROCÉDÉ POUR DÉTERMINER UN FORMAT DE DONNÉES AFIN DE TRAITER DES DONNÉES ET DISPOSITIF L EMPLOYANT

(30) Priority: 07.03.2008 US 34854 P
(43) Date of publication of application: 24.11.2010
(73) Proprietor: IMEC, 3001 Leuven (BE); Katholieke Universiteit Leuven, K.U. Leuven R&D, 3000 Leuven (BE)
(72) Inventor: BOUGARD, Bruno, B-1370 Jodoigne (BE); NOVO BRUNA, David, E-08403 Granollers Barcelona (ES)
(74) Representative: Van Bladel, Marc
(86) International application number: PCT/EP2009/001616
(87) International publication number: WO 2009/109395

(56) References cited:
- WEI LING; SAVARIA Y: "Variable-precision multiplier for equalizer with adaptive modulation" IEEE INTERNATIONAL MIDWEST SYMPOSIUM, 20040725 - 20040728, vol. 1, 25 July 2004 (2004-07-25), pages 1_553-1_556, XP010739032 ISBN: 978-0-7803-8346-3
- YOSHIZAWA S; MIYANAGA Y: "TUNABLE WORDLENGTH ARCHITECTURE FOR A LOW POWER WIRELESS OFDM DEMODULATOR" IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E89A, no. 10, 1 October 2006 (2006-10-01), pages 2866-2873, XP001502666 ISSN: 0916-8508 cited in the application

## Description

### Field of the Invention

The present invention generally relates to the field of data format selection in communication devices.

### Background of the Invention

Wireless technology is considered as a key enabler of many future consumer products and services. To cover the extensive range of applications, future handhelds will need to concurrently support a wide variety of wireless communication standards. The growing number of air interfaces to be supported makes traditional implementations based on the integration of multiple specific radios and baseband lCs cost-ineffective and claims for more flexible solutions. Software Defined Radios (SDR), where the baseband processing is deployed on a programmable or reconfigurable hardware, has been introduced as the ultimate way to achieve flexibility and cost-efficiency.

In handhelds, energy efficiency is a major concern as they are battery operated devices. The multi-mode trend adds extra needs for programmability, which may reduce the platform energy efficiency. The energy efficiency of SDR baseband is therefore a major concern. Thus there exists a challenge to design programmable handhelds (SDR requirement) that are still energy efficient (terminal requirement). New processor architectures with major improvements on energy efficiency (GOPS/mW) are emerging but are still not sufficient to catch the continuously increasing complexity of wireless physical layers within the shrinking energy budget. To enable SDR in size, weight and power constrained devices, innovation is also needed at the software side. Specifically, a thorough architecture-aware algorithm implementation approach is needed for the baseband signal processing functions, which account for a substantial portion of the SDR computational complexity. A key feature of such an approach is to enable implementations where the computation load and the related power consumption can scale and adapt to the instantaneous environment and user requirements. In this way the average power consumption can greatly be reduced.

To date, several SDR platforms have been proposed in academia and industry. Most of these platforms support the execution of wireless standards such as WCDMA (UMTS), IEEE 802.11b/g, IEEE 802.16. However, a key challenge still resides in the instantiation of such programmable architectures capable of coping with the 10x increase both in complexity and in throughput required by next-generation standards relying on multi-carrier and multi-antenna processing (IEEE 802.11n, 3GPP LTE), still being cost effective. Leveraging on the sole technology scaling is not sufficient anymore to sustain the complexity increase. In order to achieve the required high performance at an energy budget acceptable for handheld integration (∼300mW), architectures must be revisited keeping in mind the key characteristics of wireless baseband processing: high and dynamic data level parallelism (DLP) and data flow dominance.

In nowadays SDR platforms, Very Long Instruction Word (VLIW) processors with SIMD (Single Instruction - Multiple Data) functional units are often considered to exploit the data level parallelism with limited instruction fetching overhead. In other approaches, data flow dominance is sometimes exploited in coarse-grained reconfigurable arrays (CGA). The first class of architectures have tighter limitations in achievable throughput for a given clock frequency while the second class has as main disadvantage to require very low level programming.

Besides in computer architectures, innovation is also needed in the way baseband processing is handled in software, which is strongly linked with signal processing. Typically, baseband signal processing algorithms are designed and optimized with a dedicated hardware (ASIC) implementation in mind, which requires regular and manifest computation structures as well as simple control flow, maximum functional blocks reuse and minimum data word width. Programmable architectures have other requirements. Typically, they can accommodate more complex control flows. Functional reuse is not a must since not the entire area but only the instruction memory footprint benefits from it. However, they have more limitations in terms of maximal computational complexity and energy efficiency. Moreover, data types must be aligned. Taking these characteristics into account when developing the baseband algorithms is key to enable energy-efficient SDRs.

The presence of highly dynamic operative conditions in baseband digital signal processing leads to an unaffordable overhead when the typical static worst-case dimensioning approach is considered. The combination of both energy-scalable algorithm implementation and adaptive performance/energy management turns out to enable high energy efficiency as it has the potential to continuously best-fit the dynamic behaviours. When applied at algorithmic level solely, with relatively direct implementation, this approach allows one to save up to 60% of the average execution time on the DSP at negligible system performance loss, as mentioned in "Quality-Cost Scalable Chip Level Equalizer in HSDPA Receiver" (Min Li et al., Globecom '06. San Francisco°.

Similarly, but at a lower implementation level, data formats can exploit the signal range and precision dynamics to offer different trade-offs between computation accuracy and energy consumption. In communication signal processing systems, I/O correctness does not need to be preserved in the strict sense. Approximations can generally be accommodated while maintaining the desired system performance, as communication algorithms,can still function under different Signal-to-Noise Ratio (SNR) conditions. However, this tolerance to inaccuracy is dependent on the system working conditions. For instance, processing the equalization and demodulation of a signal modulated with a high order constellation may require higher accuracy than in the case of a low order one. In order to reach scalability this accuracy adjustment can be performed separately for different use-cases or scenarios. Certainly, these scenarios should be sufficiently easy to detect/distinguish at run-time.

Finite word-length refinement for data format selection has been an active research field for more than 30 years. Traditionally, most contributions have focused on the development of methods and tools that automatically convert a floating-point spec into an optimal fixed-point representation under a given user-defined Quantization Noise to Signal Ratio (QNSR). Most of the existing work on this area agrees on splitting the optimization problem in two steps: range analysis and precision analysis. The range analysis provides the margin to accommodate the growth of the data (avoiding overflow), whereas the precision analysis guarantees the accuracy of the operations. For both, range and precision analysis, dynamic and static analysis methods have been proposed. Firstly, the dynamic analysis methods, also called simulation based methods, evaluate the Data-Flow Graph (DFG) of the design using representative input signals. Secondly, the static analysis methods, also called analytical methods, propagate statistic characteristics of the inputs through the DFG. Finally, hybrid approaches have been proposed, which aim to combine the advantages of both the static and dynamic methods.

This previous work assumes that the data format assignment is performed under worst-case conditions at design-time, which would lead to sub-optimal solutions under the highly dynamic operating conditions of the SDR context considered here. Alternatively, Yoshizawa proposes in *"*Tunable Wordlength Architecture for a Low Power Wireless OFDM Demodulator" (ISCAS '06, Kos, Greece (2006)) a word-length tunable VLSI architecture for a wireless demodulator that dynamically changes its own word length according to the communication environment. The word-length selection is done at run-time depending on the observed error vector magnitude from demodulated signals. The word length is tuned to satisfy required quality of communication. This approach saves up to 30% of the power. However it assumes a dedicated hardware implementation and requires the addition of a special field (containing the known sequence used to estimate the current quantization error) into the transmission packet format. The latter jeopardizes its implementation in standard-compliant systems.

Application EP1873627 relates to a processor architecture for multimedia applications that includes a plurality of processor clusters providing vectorial data processing capability. The processing elements in the processor clusters are configured to process both data with a given bit length N and data with bit lengths N/2, N/4, and so on obtainable by portioning the bit length N according to a Single Instruction Multiple Data (SIMD) paradigm. However, no indication is given to the use of the technique in a telecommunication application.

The paper *"*Variable-Precision Multiplier for Equalizer with Adaptive Modulation" (Wei Ling et al., IEEE Int'I Midwest Symposium, July 2004, Vol.1, pp.1_553-1_556) studies the impact of word length in an Least-Mean Square (LMS) equalized adaptive demodulator. It proposes an LMS equalizer with a variable word length data path solution for different modulation types. The input noise at the demodulator is the total noise output by the LMS equalizer. This noise contains a contribution due to the error in the quantized tap-weight vector of the equalizer and a contribution due to the quantization error of the input data. At run time adaptive modulation schemes select a modulation in such a way that the noise level is just below the threshold for a target symbol error rate probability Pₛₑᵣ. One way of selecting an equalizer word length is to ensure that the noise generated by the finite word length effect of the equalizer causes only a negligible change in Pₛₑᵣ. The variable word length is achieved by employing 15-bit variable precision signed multipliers in the LMS equalizer.

### Aims of the invention

The present invention aims to provide a method for data format refinement suitable for use in energy-scalable communication systems. The invention further aims to provide a device that operates in accordance with the proposed method.

### Summary

The present invention relates to a method for determining a data format for processing data to be transmitted along a communication path as disclosed by the appended claims.

### Brief Description of the Drawings

Fig. 1 represents a flow chart of the method of the invention.

Fig. 2 represents the processor top level architecture.

Fig. 3 represents the processor core architecture.

Fig. 4 represents a block diagram of the OFDM receiver considered, with the implemented blocks highlighted.

Fig. 5 illustrates a diagram of the ADRES instance considered.

Fig. 6 illustrates BER curves of the SISO BPSK ½, before (solid) and after (dashed) fixed-point refinement (left) and its BER degradation as function of the data word length (right).

Fig. 7 illustrates throughput curves of different receiver modes.

Fig. 8 represents curves of the SISO throughput performance (a) and energy consumption (b).

Fig. 9 represents curves of the SDM throughput performance (a) and energy consumption (b).

### Detailed Description of the Invention

Aspects of the invention relate to an industry compatible approach to exploit the variations on the instantaneous minimum required precision in an energy-scalable manner, without compromising the standard compliance of the implementation. This is achieved by partially porting the data format decisions to the run-time in a scenario-based manner. Multiple design-time implementations of the same functionality with different precision, corresponding to specific use-cases or scenarios, are optimized separately and selected by a simple controller at run-time. The latter decides which implementation is more efficient given the current conditions. This technique does not depend on the selected fixed-point refinement approach (dynamic vs. static) but considers the application knowledge (through the scenario definition) to effectively guide the refinement process.

In state of the art design methodologies, data formats are typically dimensioned at design-time. This dimensioning aims to satisfy the application requirements under all the possible operating conditions. As an alternative, a scenario-oriented data format refinement, which consists of a hybrid design-/run-time approach, is proposed. In that approach, situations/scenarios where the application exhibits a different tolerance to the quantization noise are identified. Accordingly, separated fixed-point refinements are performed for each of these scenarios, resulting in multiple software implementations. At run-time, the actual scenario that best suits the current working conditions is detected and the corresponding implementation is selected by a simple controller.

Scenarios where the application exhibits a different tolerance to the noise are very common in communication systems as the channel is considered as an unpredictable source of noise and attenuation. The degree of uncertainty is especially important in wireless communications, where the system has to deal with widely varying signal to noise ratio. Besides the distance between transmitter and receiver, other random physical phenomena, such as multipath fading, can also seriously affect the received SNR.

As an example, OFDM systems, when used in the context of wireless communications (e.g. IEEE 802.11 family), are designed to provide several trade-offs between data rate and coverage. Accordingly, they offer various operational modes by implementing different combinations of sub-carrier modulation scheme and coding rate. The modulation scheme defines the amount of bits that are grouped together and transmitted on a fixed amount of sub-carriers (e.g. 1 bit per subcarrier for BPSK, 2 for QPSK, 4 for 16QAM and 6 for 64QAM) and thus importantly impacts the physical data rate. The coding rate determines the amount of redundancy added to the transmitted bitstream to enable Forward Error Correction (FEC) to be performed at the receiver. This recovers transmission errors by collecting time and frequency diversity. Reducing the modulation order or/and reducing the code rate decreases the data rate but improves the robustness of the system to the noise and attenuation.

One inventive aspect is to take the varying noise-robustness exhibited by the application into consideration when performing fixed-point refinement. It is capitalized on the fact that the extra degradation that would be introduced by moving to a cheaper fixed-point implementation may be tolerated in many situations.

Typically, the quantization of a signal is modelled by the sum of this signal and a random variable. This additive noise is a stationary and uniformly distributed white noise that is not correlated with the signal and with the other quantization noises. Thus, the effect of refining an ideal (infinite precision) linear time-invariant algorithm into a fixed-point implementation can be modelled as the initial algorithm of ideal operators fed with the sum of the ideal operands and a noise component (quantization noise). In order to extend the analysis for linear, time-invariant systems applicable to non-linear systems, the first step is the linearization of these systems. The assumption is made that the quantization errors induced by rounding or truncation are sufficiently small not to affect the macroscopic behaviour of the system. Under such circumstances, each component in the system can be locally linearized. As a result, the quantization noise can be forward propagated towards the inputs of the algorithm and be assumed to belong to the channel. Consequently, the transmission modes that tolerate higher levels of channel noise in the received signal should also be able to accept higher levels of quantization noise on their processing. These modes will require fewer bits to maintain the necessary accuracy.
In the proposed methods, the following steps are carried out:
- Floating point simulation of the communication system for the different possible configurations. In this simulation the performance curve of the different configurations is extracted for a range of received SNR.
- Fixed-point refinement of each configuration for its working SNR (SNR point from which the performance of the system saturates).
- Clustering of different configurations into the same implementation when having similar word lengths
- Finally, a controller needs to track the environmental conditions, identify the current scenario and react by selecting the most efficient implementation. The overhead introduced by this controller needs to be kept low in order to maximize the benefits given by the splitting of the application into different optimized scenarios.

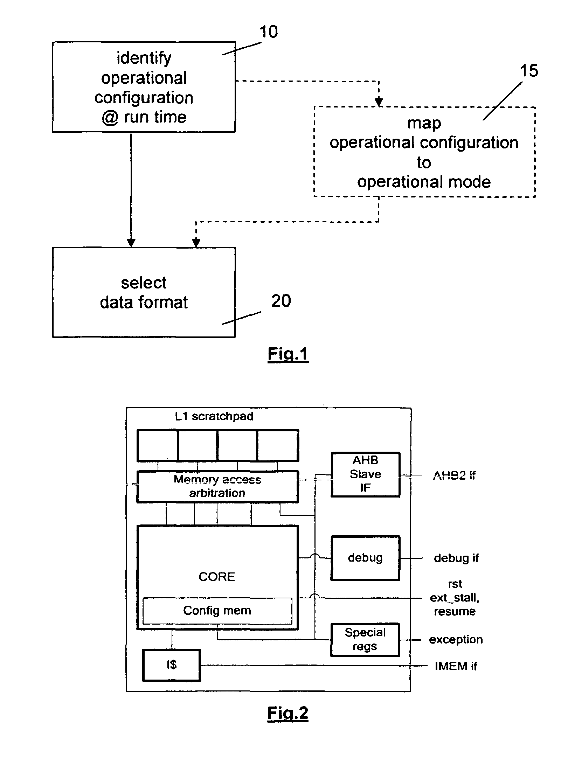

Fig.1 illustrates the main steps of the method for determining a data format for processing data to be transmitted along a communication path according to the invention. At run time an operational configuration is identified based on received information on the conditions for communication on the communication path (step 10). Optionally, the operational configuration as identified is mapped to an operational mode of a set of modes in step 15. According to the identified operational configuration or to the operational mode to which that operational configuration is mapped, a data format for processing data to be transmitted is selected among a plurality of predetermined data formats in step 20.

In a preferred embodiment, the Single Instruction Multiple Data (SIMD) architecture paradigm is leveraged to achieve reduced execution time and energy for lower precision fixed-point implementations. In particular, the fact is exploited that multiple data (sub-words) can be packed together and operated on as a single word. The size of these sub-words is variable and can be selected from a discrete set, typically of powers-of-2. The different sub-word configurations share the same hardware operators, which are configured depending on the current sub-word size. The result is called a sub-word parallel instruction-set data path. This embodiment is also applicable to pure vector processors (with fixed sub-word size) which form the other SIMD class. The execution time and energy costs associated with the operation (operand load, execution, result storage) is shared by all the sub-words. Consequently, the fewer bits that are required to represent the data, the more data can be packed together and the cheaper the processing per sub-word becomes.

In another preferred embodiment a hybrid CGA-SIMD processor is considered to map the different fixed point implementations. The latter conjugates the advantages of a SIMD data-path, which fits the high data level parallelism present in the application and enable the embodiment of the main invention, with a CGA architecture, which is leveraged to exploit the dataflow dominance and the remaining (not data dominated) application parallelism.

A possible instance of such a hybrid CGA-SIMD processor can be built based on the ADRES framework In this specific case, the processor is programmable from C-language, capitalizing on the DRESC CGA compiler.

As an example, to sustain further description of certain embodiments, the design of a specific instance of the C-programmable hybrid CGA-SIMD processor is presented. It will be apparent to those skilled in the art that the invention is not limited to the details of this illustrative embodiments, and that the present invention may be embodied with various changes and modifications without departing from the scope of the claims.

### Processor architecture

The processor is designed to serve mainly as slave in multi-core SDR platforms. The top level block diagram is depicted in Fig.2. The processor has an asynchronous reset, a single external system clock and a half-speed (AMBA) bus clock. Instruction and data flow are separated (Harvard architecture). A direct-mapped instruction cache (1$) is implemented with a dedicated 128-bit wide instruction memory interface. Data is fetched from an internal 4-bank 1-port-per-bank 16Kx32-bit scratchpad (L1) with 5-channel crossbar and transparent bank access contention logic and queuing. The L1 is accessible from external through an AMBA-compatible slave bus interface.

The core of the processor is made of a plurality of densely interconnected SIMD functional units with global and distributed register files. The CGA is associated with the multi-bank data scratchpad (L1) and provides an AMBA interface for configuration and data exchange. Besides, three functional units, operating as VLIW and sharing the global register file.

The processor can execute according to two modes. When in so-called VLIW mode, the VLIW units can execute C-compiled non-kernel code fetched through the instruction cache. When in CGA mode, C-compiled DSP kernels are executed on the CGA units while keeping configurations in local memories that are configured through direct memory access (DMA). Per scheduled loop cycle, one context is read from the configuration memories. The CGA configuration memories and special registers are also mapped to the AMBA bus interface via a 32-bit internal bus.

The DRESC framework can be used to transparently compile a single C language source code to both the VLIW and the CGA machines.

At the peripheral, the processor has a level-sensitive control interface with configurable external *endianness* and *AMBA priority* settings (settable priority between core and bus interface to access L1). *exception signaling, external stall* and *resume* input signals. Because of the large state, the processor is not interruptible when in CGA mode. The *external stall* and *resume* signals provide however an interface to work as a slave in a multi-processor platform. The first is used to stop the processor while maintaining the state (e.g. to implement flow control at SOC level). Internally, a special stop instruction can be issued that sets the processor in an internal sleep state, from which it can recover at assertion of the *resume* signal. The data scratchpad and special register bank stay accessible through the AMBA interface in sleep mode.

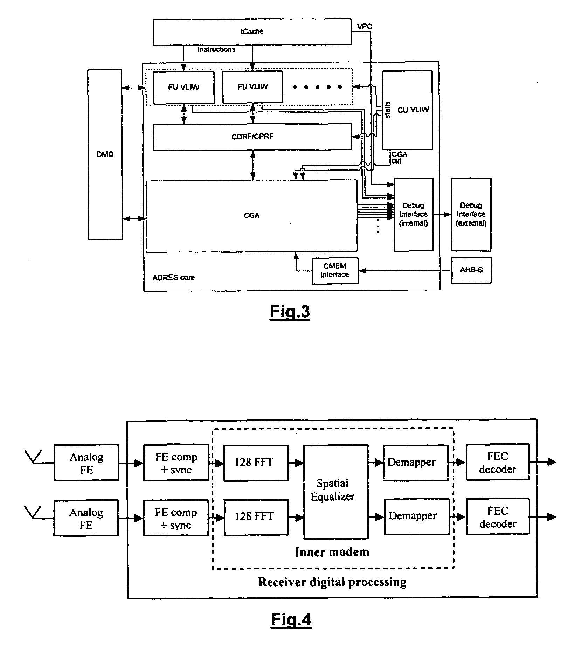

A detailed view of a possible physical implementation of the core-level architecture is depicted in Fig.3. The core is mainly made of a Global Control Unit (CGU), 3 predicated VLIW Functional Units (FU), the CGA module and a 6-read/3-write ports 64x32-bit Central Data and 64x1-bit Predicate Register File (CDRF/CPRF).

VLIW and CGA operate the CDRF/CPRF in mutual exclusion and hence its ports are multiplexed. This shared register file naturally enables the communication between the VLIW and the CGA working modes. The two modes often need to exchange data as the CGA executes data-flow dominated loops while the rest of the code is executed by the VLIW.

In this specific implementation, the CGA is made of 16 interconnected units from which 3 have a two-read/one-write port to the global data and predicate register files. The others have a local 2-read/1-write register file.

These local registers are less power hungry than the shared one due to their reduced size and number of ports. The execution of the CGA is controlled by a small size ultra wide configuration memory. The latter extends the instruction buffer approach, so common in VLIW architectures, to the CGA. On this way the CGA instruction fetching power is importantly reduced. VLIW and CGA functional units have SIMD data-paths. The supported functionality is distributed over several different instruction groups. Several dedicated instruction are used to control the SIMD operations

### Example : Multi-antenna OFDM receivers for next generation WLAN

To illustrate the validity of the proposed scenario-based method for adaptive fixed-point refinement and its embodiment in the context of the proposed hybrid SIMD-CGA architecture, the example of a high-rate OFDM receiver is presented.

Wireless communication systems must generally deliver 10x more data rate from generation to generation. In Wireless LAN (Local Area Network) systems in particular, this data rate increase can be achieved by leveraging on multiple antenna transmission techniques, especially on the so-called Space Division Multiplexing (SDM). In SDM, multiple independent data streams are transmitted in the same frequency band at the same time through different antennas. Accordingly, the system data rate grows about linearly with the number of parallel data streams.

A two-antennas SDM transceiver is considered which combines two adjacent 20 MHz channels into a single 40 MHz one (channel bonding). This configuration enables data rates higher than 200 Mbps. Fig.4 shows the block diagram of the receiver. The Fast Fourier Transform (FFT) together with the Spatial Equalizer and the demapper constitute the so-called inner modem. The FFT block processes vectors of 128 complex elements. The Spatial Equalizer cancels out the channel distortion and the inter-stream interference. A Minimum Mean Square Error (MMSE) filter is implemented therefore. Finally, the demapper translates the constellation symbols into bits.

This application exhibits no data-dependent execution. Moreover the processing is block-based, meaning that it continuously performs the same operations over blocks of 128 carriers (OFDM symbol). These two characteristics, together with a relaxed latency constraint (present in the transmission of long packets), enable block-based SIMD processing. This means that carriers belonging to consecutive OFDM symbols are packed together in a single word. Thus, the addition of a new sub-word into the original word just implies the buffering of another symbol while the control flow remains identical. This technique leads to a negligible SIMD overhead since the input buffer is already present in typical wireless architectures notably for synchronization purposes. The data shuffling required is minimal. Consequently, by doubling the amount of sub-words packed into a word one can expect about to halve the average energy and execution time.

Before any fixed-point refinement, the selected wireless system is simulated under ideal precision conditions for the different receiver modes. This is illustrated in Table 1, which shows the minimum SNR required for achieving a Bit Error Ratio (BER) of 10⁻³ for the different operation modes. The level of noise that guarantees a certain transmission performance, such as a BER below 10⁻³, interestingly varies depending on the selected mode.

**Table I**

| **mod e** | **# ant.** | **mod. scheme** | **cod. rate** | **SNR [dB] BER = 10⁻³** |
|---|---|---|---|---|
| 1 | 1 | BPSK | 1/2 | 3.0 |
| 2 | 1 | BPSK | 3/4 | 7.5 |
| 3 | 1 | QPSK | 1/2 | 6.5 |
| 4 | 1 | QPSK | 3/4 | 10.5 |
| 5 | 1 | 16QAM | 1/2 | 12.5 |
| 6 | 1 | 16QAM | 3/4 | 25.5 |
| 7 | 1 | 64QAM | 2/3 | 20.5 |
| 8 | 1 | 64QAM | 3/4 | 22.3 |
| 9 | 2 | BPSK | 1/2 | 5.5 |
| 10 | 2 | BPSK | 3/4 | 10.5 |
| 11 | 2 | QPSK | 1/2 | 11.5 |
| 12 | 2 | QPSK | 3/4 | 16.5 |
| 13 | 2 | 16QAM | 1/2 | 18.0 |
| 14 | 2 | 16QAM | 3/4 | 25.5 |
| 15 | 2 | 64QAM | 2/3 | 31.0 |
| 16 | 2 | 64QAM | 3/4 | 34.0 |

The application is prepared to be mapped on the aforementioned hybrid SIMD-CGA processor. The compiler automatically achieves high Instruction Level Parallelism (ILP). In contrast, the Data Level Parallelism (DLP) can be handled by the programmer via intrinsic C functions.

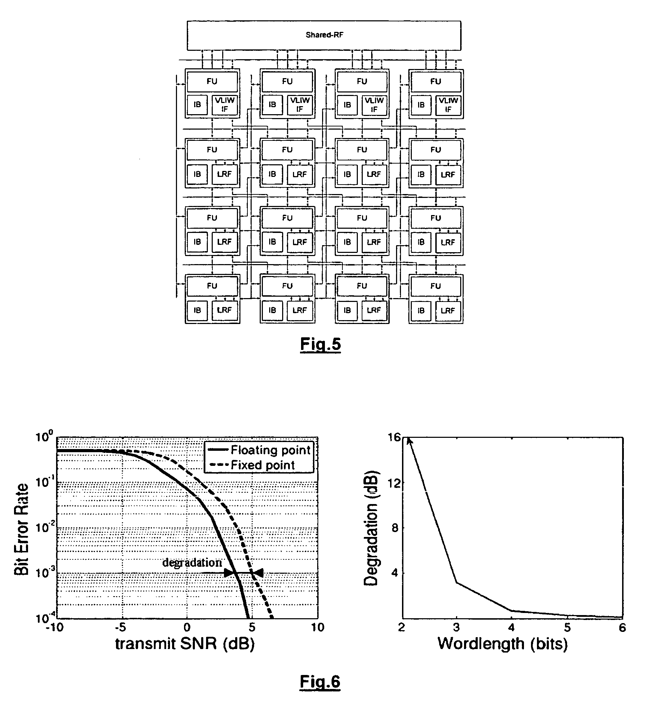

The processor instance considered throughout the example (see Fig.5), consists on a 4x4 array of 32 bit FUs. These units provide traditional DSP functionality extended with an extensive SIMD support. Table II lists some of the Instruction Set Architecture (ISA) extensions included to exploit 2-ways SIMD. The inputs (src1 and src2) and the output (dst) contain 2 concatenated sub-words, indicated with a final R and I. Similarly, the implemented ISA also includes 4-ways and 8-ways SIMD so it is sub-word parallel. Note again, that one can also use other sub-word parallel processors as target.

**Table II**

| **Instr** | **Description** | **Pseudo code** |
|---|---|---|
| cadd | complex addition | dstR = src1R + src2R |
| | | dstI = src1I + src2I |
| csub | complex subtraction | dstR = src1R - src2R |
| | | dstI = src1I - src2I |
| cshftr | complex right shifter | dstR = src1R » src2 |
| | | dstI = src1I » src2 |
| dprod | dot product | dstR = src1R * src2R dstR src1R * src2R |
| | | dstI = src1I * src2I |

A simulation-based approach is applied to cover the fixed-point data format refinement process. This can easily propagate the degradation introduced by the finite precision signals to the high-level performance metrics such as BER. In order to enable a fixed-point simulation, the signals of the initial floating-point description are instrumented. This is done by including a set of functions in the initial code which have as input the original floating-point signal and outputs a fixed-point representation. The conversion is controlled with a set of parameters. The total number of bits per signal, the number of decimal bits, the quantization mode (round or truncation) and the overflow mode (wrap-around or saturation) are the most important parameters. After giving a value to those parameters, the entire communication chain can be simulated with fixed-point precision. Consequently, the impact on the application performance of the selected fixed-point configuration (given by the set of values introduced in the instrumentation function) can be estimated.

Typically, one obtains the optimal set of parameters that satisfies a desired performance while minimizing the signals' word-length by an iterative process. Instead, according to the proposed method, one concentrates on how different fixed-point configurations, associated with different receiver conditions (scenarios), can provide important energy savings while keeping degradation to the system performance under control. For convenience, we restrict the exploration space to the traditional power-of-two word-lengths, encountered in most DSP architectures. Saturation arithmetic and rounding are also assumed.

In order to properly steer the fixed-point refinement, an application performance indicator needs to be defined. The BER curve plots the ratio of erroneous bits received at different SNR conditions. Due to the finite precision effects, the BER curve experiences a shift to the right which is commonly referred to as implementation loss (see Fig.6-left). The BER degradation is defined as the difference in SNR between the floating-point and the fixed-point representation at which the system delivers a given BER (for instance, 10⁻³) . This is considered as the minimum performance required for a reliable transmission. Then the goal of the fixed-point refinement step is to reduce signal bit-width while keeping the BER degradation below a user-defined value. Fig.6-right represents the BER degradation as function of the signal word-length. The curve monotonically grows with the bit reduction up to a point where reaches infinite degradation. This point indicates that the BER curve floors before the 10⁻³, and performance is not acceptable.

Following the proposed method, the different receiver modes/configurations are refined independently. In this example, all the configurations were assumed to have the same word-length along the different processing blocks. This reduces the overhead introduced by the inter-block shuffling operations. However, it also reduces the opportunity of having smaller word-lengths. During the fixed-point refinement, different BER degradation factors were also explored. Table III shows the resulting bit-widths. Notice that with a maximum BER degradation of 0.5 dB an important number of modes can be represented with half of the bits that are used in typical implementations. Moreover, the increase of BER degradation gradually enables even shorter word-lengths.

**Table III**

| **mode** | **0.5dB [bits]** | **1.5dB [bits]** | **2 dB [bits]** |
|---|---|---|---|
| 1 | 8 | 8 | 4 |
| 2 | 8 | 8 | 8 |
| 3 | 8 | 8 | 8 |
| 4 | 8 | 8 | 8 |
| 5 | 8 | 8 | 8 |
| 6 | 8 | 8 | 8 |
| 7 | 16 | 8 | 8 |
| 8 | 16 | 16 | 8 |
| 9 | 8 | 8 | 8 |
| 10 | 8 | 8 | 8 |
| 11 | 8 | 8 | 8 |
| 12 | 8 | 8 | 8 |
| 13 | 16 | 8 | 8 |
| 14 | 16 | 16 | 16 |
| 15 | 16 | 16 | 16 |
| 16 | 16 | 16 | 16 |

The various modes of the receiver provide different trade-offs between raw data rate and noise robustness. Since a wireless receiver also experiences different SNR conditions depending on the specific moment, the mode that performs better under the given conditions should be selected. This selection is already done by the base station and the receiver controller just needs to identify the selected modulation mode (information included in the received preamble) and switch to the corresponding implementation at run-time.

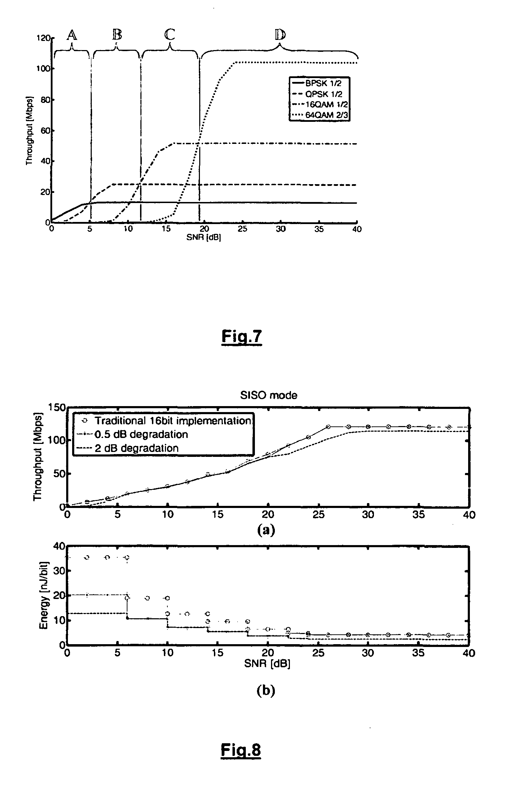

Typically, in order to decide which mode is the most appropriate for a given SNR, the link adaptation procedure identifies the mode that achieves the highest average throughput at that SNR (Fig.7 plots a reduced set for illustration purposes). The figure shows that the different receiver configurations have a SNR region where they outperform the others: A for the BPSK, B for the QPSK, C for the 16QAM and D for the 64QAM. We can assume that when the receiver is in a given SNR condition, the highest throughput configuration will be selected. From this the envelope of all the throughput curves can be defined as the system performance indicator. This approach also enables easy scenario detection at run-time.

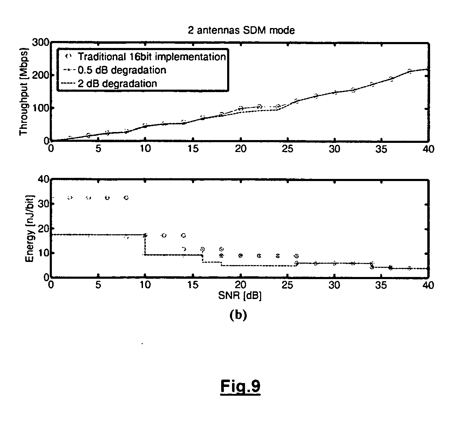

After splitting the application into the different scenarios, the inner receiver blocks previously introduced are implemented with the different resolutions indicated in Table III. The entire communication system can then be simulated and throughput curves extracted for the different implementations. Ideal synchronization and channel estimation is assumed. Following the proposed method, in this example, the set of scenarios (link adaptation) is defined for three different cases: a traditional all-modes 16 bit implementation (reference implementation since is the worst-case precision requirement) and a scenario-based data formatted implementation when allowing 0.5 and 2dB BER degradation. The throughput envelope of the three cases considering the SISO (Single-Input Single-Output) and the 2 antennas SDM mode are plot in Fig.8a and Fig.9a respectively. In addition, their corresponding energy per transmitted bit, estimated by the flow described previously, is plot in Fig.8b and Fig.9b. One can observe that the low rate configurations consume more energy than the high rate ones. This can be easily understood since for transmitting the same amount of information, the low rate configurations need to send more OFDM symbols (due to the lower modulation order and/or lower coding rate). Consequently the processor needs to process during a longer time consuming more energy per bit of information.

When little BER degradation is allowed (e.g. less than 0.5 dB), negligible system performance loss is observed. However the energy per bit of the lower rate configurations is considerably reduced. For instance, in the region from 0-6 dB of the SISO case (see Fig.8) the 16 bits sub-word implementation can be reduced to 8bits resulting in a 43% energy saving. Due to the leakage power the reduction is slightly less than the ideal 50%. When more BER degradation is allowed (e.g. less than 2 dB), the performance starts to suffer. As an indicator, when less than 2dB degradation is allowed and the receiver works with a 3dB SNR, the maximum throughput drops by 53%. However a 4bits implementation can now be accommodated, which reduces the energy by a 66%. In this case some performance is traded off by energy.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope of the claims. The present embodiments are therefore to be considered in all respects as illustrative and not restrictive, and all changes which come within the are therefore intended to be scope of the claims embraced therein. In other words, it is contemplated to cover any and all modifications or variations that fall within the scope of the claims. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means. The terms "first", "second", third", "a", "b", "c", and the like, when used in the description are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

The foregoing description details certain embodiments of the invention. It will be appreciated, however, that no matter how detailed the foregoing appears in text, the invention may be practiced in many ways. It should be noted that the use of particular terminology when describing certain features or aspects of the invention should not be taken to imply that the terminology is being re-defined herein to be restricted to including any specific characteristics of the features or aspects of the invention with which that terminology is associated.

While the above detailed description has shown, described, and pointed out novel features of the invention as applied to various embodiments, it will be understood that various omissions, substitutions, and changes in the form and details of the device or process illustrated may be made by those skilled in the technology without departing from the scope of the claims.

## Claims

1. A method for determining a data format for representing data in an algorithm to process signals to be transmitted along a communication path, comprising the steps of :
- performing at design-time the substeps of :
o performing simulations for a predetermined set of different possible configurations,
o clustering, based on said simulations, said predetermined set of different possible configurations in operational scenarios with different tolerance to quantization noise and
o performing separate fixed-point refinements for said data using predetermined data formats for each of said operational scenarios, resulting in a plurality of implementations in software, and
- performing at run-time the substeps of :
o receiving information on the current conditions for communication on said communication path,
o identifying an operational scenario based on said received information,
o selecting a predetermined data format corresponding to said identified operational scenario for representing said data in said algorithm, whereby the selected data format determines the word length of words in said data,
o applying said algorithm to process said signals to be transmitted, and
o transmitting said signals.

2. Method as in claim 1, wherein said step of identifying comprises mapping said identified operational scenario to one of said different possible configurations and wherein said data format is selected corresponding to the configuration to which the operational scenario is mapped.

3. Method as in any of claims 1 to 2, comprising the step of determining said information on the current communication conditions on said communication path.

4. Method as in any of claims 1 to 3, whereby in said step of identifying at run-time said operational scenario a varying noise-robustness is taken into account exhibited by an application wherein said data is used.

5. Method for determining a data format for representing data in an algorithm to process signals to be transmitted as in any of the previous claims, wherein said step of applying said algorithm is performed on a single instruction multiple data processor.

6. Communication device arranged for
- performing at design time
o simulations for a predetermined set of different possible configurations,
o a clustering, based on said simulations, of said predetermined set of different possible configurations in operational scenarios with different tolerance to quantization noise and
o separate fixed-point refinements for representing data in an algorithm to process signals to be transmitted along a communication path, using predetermined data formats for each of said operational scenarios, resulting in a plurality of implementations in software, and for
- performing at run-time
o reception of information on the current communication conditions on said communication path,
o identification of an operational configuration based on said received information
whereby said device comprises selection means for selecting a predetermined data format corresponding to said operational scenario for representing said data in said algorithm, whereby the selected data format determines the word length of words in said data, said device further arranged for applying said algorithm to process signals to be transmitted and comprising transmission means for transmitting said signals.

7. Communication device as in claim 6, further comprising a single instruction multiple data processor.

8. Communication device as in claim 6, further comprising a hybrid single instruction multiple data - coarse grain array processor.

9. Communication device as in any of claims 6 to 8, wherein said selection means is a run-time controller.

## Patentansprüche

1. Verfahren zum Bestimmen eines Datenformats zum Repräsentieren von Daten in einem Algorithmus zum Verarbeiten von auf einem Kommunikationspfad zu übertragenden Signalen, mit den folgenden Schritten:
- Ausführen der folgenden Teilschritte zur Entwicklungszeit :
o Durchführen von Simulationen für eine vorbestimmte Menge von verschiedenen möglichen Konfigurationen,
o Clustern der vorbestimmten Menge verschiedener möglicher Konfigurationen in operationalen Szenarien mit verschiedener Toleranz gegenüber Quantisierungsrauschen auf der Basis der Simulationen und
o Durchführen von separaten Festpunktverfeinerungen für die Daten unter Verwendung vorbestimmter Datenformate für jedes der operationalen Szenarien, was zu mehreren Implementierungen in Software führt, und
- Ausführen der folgenden Teilschritte zur Laufzeit:
o Empfangen von Informationen über die aktuellen Bedingungen für die Kommunikation auf dem Kommunikationspfad,
o Identifizieren eines operationalen Szenarios auf der Basis der empfangenen Informationen,
o Auswählen eines vorbestimmten Datenformats entsprechend dem identifizierten operationalen Szenario zum Repräsentieren von Daten in dem Algorithmus, wobei das gewählte Datenformat die Wortlänge von Wörtern in den Daten bestimmt,
o Anwenden des Algorithmus zum Verarbeiten der zu übertragenden Signale und
o Übertragen der Signale.

2. Verfahren nach Anspruch 1, wobei der Schritt des Identifizierens das Abbilden des identifizierten operationalen Szenarios auf eine der verschiedenen möglichen Konfigurationen umfasst und wobei das Datenformat entsprechend der Konfiguration ausgewählt wird, auf die das operationale Szenario abgebildet wird.

3. Verfahren nach einem der Ansprüche 1 bis 2 mit dem Schritt des Bestimmens der Informationen über die aktuellen Kommunikationsbedingungen auf dem Kommunikationspfad.

4. Verfahren nach einem der Ansprüche 1 bis 3, wobei bei dem Schritt des Identifizierens des operationalen Szenarios zur Laufzeit eine variierende Rauschrobustheit berücksichtigt wird, die eine Anwendung aufweist, bei der die Daten verwendet werden.

5. Verfahren zum Bestimmen eines Datenformats zum Repräsentieren von Daten in einem Algorithmus zum Verarbeiten von zu übertagenden Signalen nach einem der vorhergehenden Ansprüche, wobei der Schritt des Anwendens des Algorithmus auf einem Einzelanweisungs-Mehrfachdatenprozessor ausgeführt wird.

6. Kommunikationseinrichtung, die für Folgendes ausgelegt ist:
- Ausführen von Folgendem zur Entwicklungszeit:
o Simulationen für eine vorbestimmte Menge von verschiedenen möglichen Konfigurationen,
o eine Clusterung der vorbestimmten Menge von verschiedenen möglichen Konfigurationen in operationalen Szenarien mit verschiedener Toleranz gegenüber Quantisierungsrauschen auf der Basis der Simulationen und
o separate Festpunktverfeinerungen zum Repräsentieren von Daten in einem Algorithmus zum Verarbeiten von auf einem Kommunikationspfad zu übertragenden Signalen unter Verwendung vorbestimmter Datenformate für jedes der operationalen Szenarien, was zu mehreren Implementierungen in Software führt, und
- Ausführen von Folgendem zur Laufzeit:
o Empfangen von Informationen über die aktuellen Kommunikationsbedingungen auf dem Kommunikationspfad,
o Identifikation einer operationalen Konfiguration auf der Basis der empfangenen Informationen,
wobei die Einrichtung Auswahlmittel zum Auswählen eines vorbestimmten Datenformats entsprechend dem operationalen Szenario zum Repräsentieren der Daten in dem Algorithmus umfasst, wobei das ausgewählte Datenformat die Wortlänge von Wörtern in den Daten bestimmt, wobei die Einrichtung ferner dafür ausgelegt ist, den Algorithmus anzuwenden, um zu übertragende Signale zu verarbeiten, und ferner Übertragungsmittel zum Übertragen der Signale umfasst.

7. Kommunikationseinrichtung nach Anspruch 6, die ferner einen Einzelanweisungs-Mehrfachdatenprozessor umfasst.

8. Kommunikationseinrichtung nach Anspruch 6, die ferner einen hybriden Einzelanweisungs-Mehrfachdaten-Coarse-Grain-Array-Prozessor umfasst.

9. Kommunikationseinrichtung nach einem der Ansprüche 6 bis 8, wobei das Auswahlmittel ein Laufzeit-Controller ist.

## Revendications

1. Un procédé de détermination d'un format de données destiné à représenter des données dans un algorithme de façon à traiter des signaux à transmettre le long d'un trajet de communication, comprenant les opérations suivantes :
- la réalisation, au moment de la conception, des sous-opérations suivantes :
o la réalisation de simulations pour un ensemble prédéterminé de configurations possibles différentes,
o le regroupement, en fonction desdites simulations, dudit ensemble prédéterminé de configurations possibles différentes en scénarios opérationnels avec une tolérance au bruit de quantification différente, et
o la réalisation d'affinages à point fixe distincts pour lesdites données au moyen de formats de données prédéterminés pour chacun desdits scénarios opérationnels, résultant en une pluralité de mises en oeuvre dans des logiciels, et
- la réalisation, au moment de l'exécution, des sous-opérations suivantes :
o la réception d'informations relatives aux conditions actuelles pour une communication sur ledit trajet de communication,
o l'identification d'un scénario opérationnel en fonction desdites informations reçues,
o la sélection d'un format de données prédéterminé correspondant audit scénario opérationnel identifié de façon à représenter lesdites données dans ledit algorithme, grâce à quoi le format de données sélectionné détermine la longueur de mot de mots dans lesdites données,
o l'application dudit algorithme de façon à traiter lesdits signaux à transmettre, et
o la transmission desdits signaux.

2. Le procédé selon la Revendication 1, où ladite opération d'identification comprend la mise en correspondance dudit scénario opérationnel identifié avec l'une desdites configurations possibles différentes et où ledit format de données est sélectionné en fonction de la configuration avec laquelle le scénario opérationnel est mis en correspondance.

3. Le procédé selon l'une quelconque des Revendications 1 à 2, comprenant l'opération de détermination desdites informations relatives aux conditions de communication actuelles sur ledit trajet de communication.

4. Le procédé selon l'une quelconque des Revendications 1 à 3, grâce auquel, dans ladite opération d'identification, au moment de l'exécution, dudit scénario opérationnel, une robustesse au bruit variable est prise en compte démontrée par une application dans laquelle lesdites données sont utilisées.

5. Le procédé de détermination d'un format de données destiné à représenter des données dans un algorithme de façon à traiter des signaux à transmettre selon l'une quelconque des Revendications précédentes, où ladite opération d'application dudit algorithme est réalisée sur un processeur à instruction unique, données multiples.

6. Un dispositif de communication agencé pour
- la réalisation, au moment de la conception, de
o simulations pour un ensemble prédéterminé de configurations possibles différentes,
o un regroupement, en fonction desdites simulations, dudit ensemble prédéterminé de configurations possibles différentes en scénarios opérationnels avec une tolérance au bruit de quantification différente, et
o des affinages à point fixe distincts destinés à représenter des données dans un algorithme de façon à traiter des signaux à transmettre le long d'un trajet de communication, au moyen de formats de données prédéterminés pour chacun desdits scénarios opérationnels, résultant en une pluralité de mises en oeuvre dans des logiciels, et pour
- la réalisation, au moment de l'exécution, de
o la réception d'information relatives aux conditions de communication actuelles sur ledit trajet de communication,
o l'identification d'une configuration opérationnelle en fonction desdites informations reçues,
grâce à quoi ledit dispositif comprend un moyen de sélection destiné à la sélection d'un format de données prédéterminé correspondant audit scénario opérationnel de façon à représenter lesdites données dans ledit algorithme, grâce à quoi le format de données sélectionné détermine la longueur de mot de mots dans lesdites données, ledit dispositif étant agencé en outre pour l'application dudit algorithme de façon à traiter des signaux à transmettre et comprenant un moyen de transmission pour la transmission desdits signaux.

7. Un dispositif de communication selon la Revendication 6, comprenant en outre un processeur à instruction unique, données multiples.

8. Un dispositif de communication selon la Revendication 6, comprenant en outre un processeur hybride vectoriel à granularité grossière - à instruction unique, données multiples.

9. Un dispositif de communication selon l'une quelconque des Revendications 6 à 8, où ledit moyen de sélection est un contrôleur d'exécution.
